# EUROPÄISCHE PATENTANMELDUNG

(11) **EP 1 092 520 A1**
(43) Veröffentlichungstag der Anmeldung: **18.04.2001**
(21) Anmeldenummer: 99810939.1
(22) Anmeldetag: 15.10.1999
(51) Int. Cl.: B29B 17/00

(54) **Verfahren zur Wiederverwertung von Autopneus, Gummi oder Elastomerabfällen und Thermoplastabfällen jeder Art**

(71) Anmelder: Holzer, Franz, 5727 Oberkulm (CH)
(72) Erfinder: Holzer, Franz, 5727 Oberkulm (CH)

(57) **Zusammenfassung**

Das Verfahren zur Wiederverwertung von Gebrauchtreifen oder anderen Gummi- oder Elastomerabfällen in Verbindung mit Thermoplastabfällen aller Art, heiss oder kalt (unter hohem Druck gepresst) in Formen gegossen oder gepresst für alle möglichen Anwendungen. Eventuell auch mit zusätlichen Bindemittel.

## Beschreibung

### Beschreibung der Erfindung:

Ganze oder zerkleinerte Gebrauchtreifen, Gummi- oder Elastomerteile sowie Thermoplastabfälle werden gemahlen und in unterschiedlichem Verhältnis gemischt, erhitzt und in eine Form gegossen oder gepresst..

Der geschmolzene Thermoplast dringt in die Oberflächenporen der Gummiteile oder umschliesst diese ganz, so dass der Gummi oder die Elastomere dem Füllstoff der Masse entspricht.

Die so entstandene Bindenahtfestigkeit ist sehr hoch und vor allem physikalischer Natur.

### Die Festigkeit der Fertigteile

Diese hängen von dem Mischungsverhältnis der Materialien ab. Die verschiedenen Produkte können - je nach Bedarf - zusätzlich mit Betoneisen, Glasfasern oder anderen Materialien armiert werden.

### Die Oberflächenstruktur

Diese hängt ausschliesslich vom Gummianteil und dessen Teilgrössen ab. Auch der Pressdruck hat Einfluss auf die Oberfläche.

### Anwendungsbeispiele

Bodenplatten für Garten und andere Gehwege, Randsteinborde, Bausteine, Böschungswände, Schalungen, Lärmschutzwände, Eisenbahnschwellen, Leitplanken, Verkehrssignale u.a.m.

### Schlussfolgerung

Es ist dies eine sinnvolle Wiederverwertung von in grossen Mengen anfallenden Abfallprodukten, welche in allen anderen Entsorgungsmethoden grosse Probleme bieten.

## Patentansprüche

1. Das Verfahren zur Wiederverwertung von Gebrauchtreifen oder anderen Gummi- oder Elastomerabfällen In Verbindung mit Thermoplastabfällen aller Art, heiss oder kalt ( unter hohem Druck gepresst) in Formen gegossen oder gepresst für alle möglichen Anwendungen. Eventuell auch mit zusätzlichen Bindemittel.
